# EUROPÄISCHE PATENTSCHRIFT

(11) **EP 3 123 039 B1**
(45) Veröffentlichungstag und Bekanntmachung des Hinweises auf die Patenterteilung: **02.05.2018**
(21) Anmeldenummer: 15700461.5
(22) Anmeldetag: 15.01.2015
(51) Int. Cl.: F16C 37/00, F02C 7/12, F04D 29/58

(54) **KÜHLHÜLSE FÜR EIN LAGER UND LAGER MIT KÜHLHÜLSE**
COOLING SLEEVE FOR A BEARING AND BEARING COMPRISING A COOLING SLEEVE
DOUILLE DE REFROIDISSEMENT POUR UN PALIER ET PALIER ÉQUIPÉ D'UNE DOUILLE DE REFROIDISSEMENT

(30) Priorität: 26.03.2014 DE 102014205599
(43) Veröffentlichungstag der Anmeldung: 01.02.2017
(73) Patentinhaber: Robert Bosch GmbH, 70442 Stuttgart (DE)
(72) Erfinder: HAGER, Simon, CH-3426 Aefligen (CH); TRESCH, Roger, CH-4313 Möhlin (CH); STIEGER, Werner, CH-4702 Oensingen (CH); BOLLER, Rolf, CH-4450 Sissach (CH)
(86) Internationale Anmeldenummer: PCT/EP2015/050656
(87) Internationale Veröffentlichungsnummer: WO 2015/144320

(56) Entgegenhaltungen:
- GB-A- 962 277
- GB-A- 2 458 287
- JP-A- 2010 091 053
- US-A1- 2004 096 130

## Beschreibung

Die Erfindung betrifft eine Kühlhülse für ein Lager, insbesondere Radiallager oder Axiallager nach dem Oberbegriff des Patentanspruchs 1 sowie ein Lager mit einer entsprechenden Kühlhülse.

### Stand der Technik

Lager wie Axiallager und Radiallager werden beispielsweise dazu verwendet, eine Welle in einem Gehäuse zu lagern. Dabei kann eine ungenügende Wärmeabfuhr über die Lagerhülse beispielsweise den Einsatz von Permanentmagneten und/oder Bandagen im Rotorbereich eines Elektromotors limitieren. Ferner können wärmebedingte Längenänderungen zu Asymmetrien und einen Verzug in der Lagerung führen.

Zur Wärmeabfuhr ist es prinzipiell bekannt, Kühlkörper zu verwenden. Damit über diese Kühlkörper aber eine ausreichende Wärmeabfuhr erfolgen kann, müssen diese in einem direkten Kontakt beispielsweise mit der Lagerhülse stehen, wobei die dafür üblicherweise verwendete Presspassung in einer mechanischen Belastung der Lagerhülse resultiert.

Aus DE 10 2008 017 755 A1 ist beispielsweise eine Kühlanordnung für ein Getriebe bekannt, das einen Kühlkörper aufweist, der eine Durchgangsbohrung zum Durchführen einer Welle aufweist, wobei vom Kühlkörper in radialer Richtung Kühlrippen ausgehen. Dieser Kühlkörper rotiert mit der Welle, wobei als zusätzlicher Kühleffekt ausgenutzt wird, dass durch die Bewegung des Kühlkörpers beziehungsweise der Rippen eine Luftverwirbelung erfolgt.

Ein derartiger Kühlkörper ist bei begrenzten Platzverhältnissen, insbesondere innerhalb eines Gehäuses eines Elektromotors oder beispielsweise eines Kompressors, kaum einsetzbar. Darüber hinaus ist eine ausreichende Frischluftzufuhr erforderlich. Eine zusätzliche Kühlung mittels einer Kühlflüssigkeit ist dabei nicht ohne weiteres realisierbar.
Die GB 2458287 A offenbart eine Kupplungsgruppe mit einer antreibenden Platte umfassend ein thermisch leitfähiges Element, wobei das thermisch leitfähige Element ausgebildet ist zum Bürsten oder Reiben gegenüber einer separaten gekühlten Platte als Teil der Kupplungsgruppe oder als benachbartes Teil, dies um eine leitende Kühlung der antreibenden Platte zu gewährleisten. Die JPH08140311 offenbart einen Motor mit einer Kühlhülse für ein Lager, wobei die Kühlhülse mit einem zusätzlichen Teil befestigt werden muss. Der Erfindung liegt nun die Aufgabe zugrunde, eine Möglichkeit zum Kühlen insbesondere mittels Fluidkühlung einer Lagerhülse anzugeben, die eine effektive Wärmeabfuhr ermöglicht, mit geringem Bauraum auskommt und eine mechanische Belastung der Lagerhülse gering hält.
Erfindungsgemäß wird diese Aufgabe durch eine Kühlhülse mit den Merkmalen des Patentanspruchs 1 beziehungsweise durch ein Lager mit den Merkmalen des Patentanspruchs 12 gelöst. Vorteilhafte Weiterbildungen sind den Unteransprüchen zu entnehmen.

### Offenbarung der Erfindung

Bei einer Kühlhülse für ein Lager, die einen radialen Flansch mit einer zentralen Durchgangsöffnung aufweist, in der eine Lagerhülse einpassbar ist, ist also erfindungsgemäß vorgesehen, dass von der zentralen Durchgangsöffnung tendenziell radial nach außen laufende Schlitze ausgehen. Diese Schlitze sind dabei an ihrem radial äußeren Ende geschlossen und zur Durchgangsöffnung offen. Tendenziell radial nach außen bedeutet in diesem Zusammenhang, dass ein äußeres geschlossenes Ende des jeweiligen Schlitzes radial weiter außen liegt als die zentrale Durchgangsöffnung, von der die Schlitze ausgehen. Die Schlitze können also geradlinig oder gebogen ausgebildet sein, wobei sie in einer bevorzugten Ausgestaltung geradlinig und senkrecht zu einer Längsachse der Kühlhülse verlaufen. Dabei wird durch diese Schlitze die Steifigkeit der Kühlhülse herabgesetzt, ohne einen Wärmefluss von der Lagerhülse über die Kühlhülse nach außen merklich zu beeinflussen. Die mechanische Belastung der Lagerhülse, insbesondere durch eine Einschnürung aufgrund einer Presspassung, wird so reduziert. Dennoch kann eine sichere Kontaktierung zwischen der Kühlhülse und der Lagerhülse, die für eine gute Wärmeableitung erforderlich ist, gewährleistet werden. Als Lager bieten sich in erster Linie Radiallager an, ein Einsatz für Axiallager ist aber ebenso möglich. Dabei ermöglicht die Kühlhülse einen Wärmetransport von der Lagerhülse zu einer umgebenden Gehäusewandung des Lagers, mit der die Kühlhülse in Kontakt bringbar ist.

Vorzugsweise ist die Lagerhülse mittels Presspassung in der Durchgangsöffnung gehalten. Damit sind ein sicherer Halt und eine gute Wärmeübertragung gewährleistet. AIternativ oder zusätzlich kann die Lagerhülse auch innerhalb der Durchgangsöffnung beispielsweise verschraubt, verlötet, verschweißt oder verklebt sein.

Dabei ist besonders bevorzugt, dass die Schlitze gleichmäßig in Umfangsrichtung verteilt sind. Damit ergibt sich auch eine gleichförmige Belastung, Kraftverteilung und Wärmeleitung.

Vorteilhafterweise ist an einem radial äußeren Ende der Schlitze jeweils eine Erweiterung ausgebildet, wobei die Erweiterung insbesondere kreisförmig ausgeformt ist. Die Schlitze sind also an ihren radial äußeren Enden aufgeweitet. Durch diese Erweiterung wird die Elastizität der Kühlhülse weiter verbessert, wobei insbesondere das Risiko minimiert wird, dass bei einer Verformung der Kühlhülse Risse im Material auftreten.

Vorzugsweise sind an einem äußeren Rand des Flansches der Kühlhülse elastische und/oder biegbare Laschen angeordnet, die eine axiale Erstreckung aufweisen. Diese elastischen Laschen dienen dann zur Anlage an einem Gehäuse, sodass die Wärme von der Lagerhülse über den Flansch und die Laschen an das Gehäuse abgeführt werden kann. Gegebenenfalls kann auch eine aktive Kühlung der Laschen beispielsweise mittels Kühlflüssigkeit vorgesehen werden. Dabei können die Laschen derartig bemessen sein, dass sie unter Vorspannung an das Gehäuse angelegt werden, sodass eine sichere Anlage und damit eine gute Wärmeübertragung erfolgt. Die Laschen können dabei gleichmäßig über den gesamten Umfang des Flansches verteilt sein, es ist aber auch möglich, gruppenweise Laschen vorzusehen, um den zur Verfügung stehenden Raum gut auszunutzen.

Die Laschen können dann derartig angeordnet sein, dass sie eine zylinderförmige Einhüllende aufweisen. Dabei kann über die Laschen eine radiale Presspassung mit dem Gehäuse realisiert werden. Insbesondere weist die Kühlhülse dann mit den Laschen und dem Flansch einen im Wesentlichen C-förmigen Längsschnitt auf.

In einer bevorzugten Weiterbildung sind die Laschen ausgehend vom Flansch zumindest abschnittsweise nach außen geneigt. Dadurch ist es relativ einfach möglich, die Laschen unter Vorspannung in ein Gehäuse des Lagers einzuführen, wobei eine flächige Anlage der Laschen an eine Gehäusewandung erreichbar ist. Die Neigung verbessert dabei die Verformbarkeit der Laschen, wobei trotzdem ein guter Wärmetransport mittels Wärmeleitung erreicht wird.

Vorzugsweise weist der Flansch eine zumindest teilweise konusförmige Umfangswandung auf, die sich in Richtung der Laschen aufweitet. Eine derartige konische Ausbildung erleichtert das Einführen der Kühlhülse in das Gehäuse. Insbesondere kann dabei eine Vorpositionierung erfolgen und eine Überlastung der Laschen verhindert werden.

In einer bevorzugten Ausgestaltung ist zwischen der konusförmigen Umfangswandung und den Laschen eine Einschnürung ausgebildet. Damit steht für die Bewegung der Laschen ausreichend Raum zur Verfügung. Auch wird eine Materialdicke der Laschen im Bereich ihrer Anbindung an den Flansch gering gehalten, sodass die Elastizität relativ hoch sein kann. Ferner kann die Einschnürung als Anschlag dienen, um die Kühlhülse gegenüber der Gehäusewandung axial zu sichern.

In einer weiteren bevorzugten Ausführungsform weist die Kühlhülse eine rohrförmige Wandung auf, die beidseitig axial über den Flansch hinausgeht. Die Kühlhülse hat dann einen H-förmigen Längsschnitt. Von der rohrförmigen Wandung geht der Flansch radial nach innen, wobei der Flansch insbesondere zentrisch, also mit gleichem Abstand zu den Enden der rohrförmigen Wandung angeordnet ist. Dabei ist die Wandung insbesondere einstückig mit dem Flansch ausgebildet.

Die rohrförmige Wandung ermöglicht eine großflächige Wärmeabgabe von der Kühlhülse. Beispielsweise kann die rohrförmige Wandung im flächigen Kontakt mit einem Gehäuse stehen.

In einer bevorzugten Ausgestaltung sind in einer Außenseite der Wandung Rippen eingeprägt. Damit steht für die Wärmeabgabe eine vergrößerte Oberfläche zur Verfügung. Auch ist es möglich, durch die Rippen beispielsweise eine Kühlflüssigkeit zu leiten und so Wärme aktiv von der Kühlhülse abzuführen. Die Kühlflüssigkeit kann dann insbesondere zwischen den Rippen geführt werden, sodass sie zwischen der Kühlhülse und einem Gehäuse hindurchströmen kann. Die Rippen sind dafür insbesondere in Umfangsrichtung umlaufend ausgebildet.

Vorzugsweise sind an axialen Enden der Wandung Ringnuten zur Aufnahme einer Dichtung eingeformt. Die Ringnuten sind dabei insbesondere in Umfangsrichtung umlaufend ausgebildet. Mit Hilfe dieser Dichtungen, die insbesondere als Radialdichtungen oder Axialdichtungen ausgebildet sind, kann ein dichter Abschluss zwischen der Kühlhülse und dem Gehäuse hergestellt werden, ohne dass eine direkte Anlage der Kühlhülse an der Wandung erforderlich ist. Damit können Material- und Fertigungstoleranzen ausgeglichen werden, wobei die mechanische Belastung der Kühlhülse gering gehalten wird. Dabei ermöglichen die Dichtungen, die insbesondere als O-Ring ausgebildet sind, eine mechanische Entkopplung von Gehäuse und Kühlhülse.

Vorzugsweise ist eine Materialdicke im Bereich der Wandung geringer als im Bereich des Flansches. Die Wandung weist so eine relativ geringe Steifigkeit auf. Eine mechanische Belastung und die Übertragung von Spannungen werden so gering gehalten.

Die Aufgabe wird durch ein Lager mit einer Kühlhülse dadurch gelöst, dass eine Lagerhülse in die Durchgangsöffnung der Kühlhülse eingepasst ist. Die Kühlhülse ist so sicher auf der Lagerhülse befestigt, wobei beispielsweise durch eine Presspassung eine gute Wärmeübertragung gewährleistet ist. Eine Befestigung der Kühlhülse kann aber beispielsweise auch mittels Verklebung, Löten, Schweißen oder über eine Schraubverbindung erfolgen. Die Kühlhülse ist dabei derartig ausgebildet, dass sie eine radiale Wärmeabfuhr erlaubt. Die Kühlhülse weist dafür ein entsprechendes wärmeleitfähiges Material auf, beispielsweise ist sie als Blechteil oder als Gussteil ausgebildet.

Dabei ist besonders bevorzugt, dass die Kühlhülse an einem Bereich der Lagerhülse mit verringertem oder vergrößertem Durchmesser angeordnet ist, wobei die Lagerhülse und die Kühlhülse radial und/oder axial an eine Gehäusewandung anlegbar sind. Ein ununterbrochener Wärmefluss kann so erreicht werden. Dabei kann gegebenenfalls eine Kühlflüssigkeit zwischen der Gehäusewandung und der Kühlhülse durchgeführt werden, um eine aktive Wärmeabfuhr herzustellen. Es ist aber auch denkbar, die Kühlhülse unter Vorspannung an die Gehäusewandung anzulegen und so die Wärme direkt zu übertragen.

Ein bevorzugter Einsatzbereich für ein derartiges Lager mit einer entsprechenden Kühlhülse liegt beispielsweise bei Turbokompressoren, die insbesondere in reversiblen Wärmepumpen eingesetzt werden. Bei derartigen Turbokompressoren wird eine präzise, schnelle und leistungsstarke Rotation der in der Lagerhülse gelagerten Welle gefordert. Dafür ist eine ausreichende Wärmeabfuhr insbesondere von der Lagerhülse erforderlich, die durch die erfindungsgemäße Kühlhülse realisiert werden kann.

Die Erfindung wird im Folgenden anhand bevorzugter Ausführungsbeispiele in Verbindung mit den Zeichnungen näher beschrieben. Hierin zeigen:
- Fig. 1: eine Kühlhülse einer ersten Ausführungsform in dreidimensionaler Darstellung,
- Fig. 2: eine Seitenansicht der Kühlhülse nach Figur 1,
- Fig. 3: eine Stirnansicht der Kühlhülse nach Figur 1,
- Fig. 4: ein Lager mit einer Kühlhülse nach Figur 1,
- Fig. 5: eine zweite Ausführungsform einer Kühlhülse in dreidimensionaler Darstellung,
- Fig. 6: eine geschnittene Seitenansicht der Kühlhülse nach Figur 5,
- Fig. 7: eine Stirnansicht der Kühlhülse nach Figur 5 und
- Fig. 8: ein Lager mit einer Kühlhülse nach Figur 5.

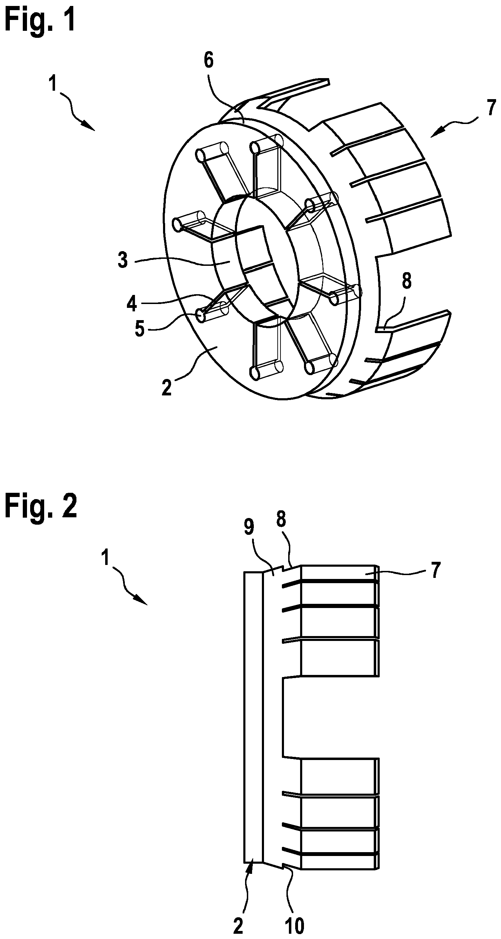

In Fig. 1 ist eine Kühlhülse 1 für ein als Radiallager ausgebildetes Lager dargestellt, die einen radialen Flansch 2 aufweist, der mit einer zentrischen Durchgangsöffnung 3 versehen ist. In der Durchgangsöffnung kann eine Lagerhülse eingepresst werden, sodass diese flächig an einer Innenfläche des Flansches 2 im Bereich der Durchgangsöffnung 3 anliegt. Dadurch ist eine gute Wärmeabfuhr von der Lagerhülse auf den Flansch 2 und damit auch die Kühlhülse 1 möglich.

Im Flansch 2 sind gleichmäßig in Umfangsrichtung verteilt mehrere Schlitze 4 ausgebildet, die radial nach innen zur Durchgangsöffnung 3 offen sind, nach radial außen aber abgeschlossen sind. Dabei weisen die Schlitze an ihrem radial äußeren Ende eine kreisförmige Erweiterung 5 auf.

An einem äußeren Rand 6 des Flansches 2 sind elastisch biegbare Laschen 7 angeordnet, die sich im Wesentlichen in axialer Richtung erstrecken. Dabei sind die Laschen 7 mit einem Bereich 8 an den Flansch 2 angeschlossen, der radial nach außen geneigt ist. Dadurch ist es möglich, die Laschen 7 unter radialer Vorspannung an ein Gehäuse anzulegen.

In Fig. 2 ist eine Seitenansicht der Kühlhülse 1 gemäß Fig. 1 gezeigt. Es ist zu erkennen, dass der Flansch 2 eine teilweise konusförmige Umfangswandung 9 aufweist, die sich in Richtung der Laschen 7 erweitert. Dabei ist zwischen der konusförmigen Umfangswandung 9 und den Laschen 7 eine Einschnürung 10 ausgebildet, sodass die konusförmige Umfangswandung 9 die Elastizität der Laschen 7 nicht beeinflusst.

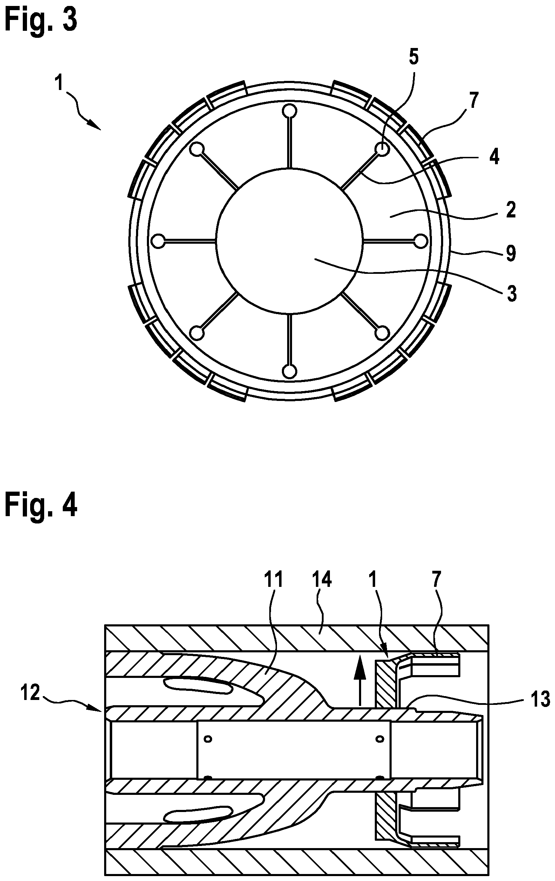

Fig. 3 zeigt die Kühlhülse 1 gemäß Fig. 1 in Stirnansicht. Es ist zu erkennen, dass die Laschen 7 auf einer gedachten Zylinderwandung liegen. Dabei sind bei diesem Ausführungsbeispiel die Laschen 7 jeweils in Gruppen von vier Laschen zusammengefasst. Andere Ausgestaltungen sind aber ebenfalls denkbar.

Fig. 4 zeigt eine Einbausituation der Kühlhülse 1 in Kombination mit einer Lagerhülse 11 eines als Radiallager ausgebildeten Lagers 12. Dabei ist die Kühlhülse 1 auf die Lagerhülse 11 in einem Bereich 13 aufgepresst, der einen verringerten Durchmesser aufweist. Umfangseitig beziehungsweise in Radialrichtung liegt sowohl die Kühlhülse 1 über die Laschen 7 als auch die Lagerhülse 11 an einer Gehäusewandung 14 an. Damit kann über die Kühlhülse 1 Wärme von der Lagerhülse 11 an die Gehäusewandung 14 abgeführt werden.

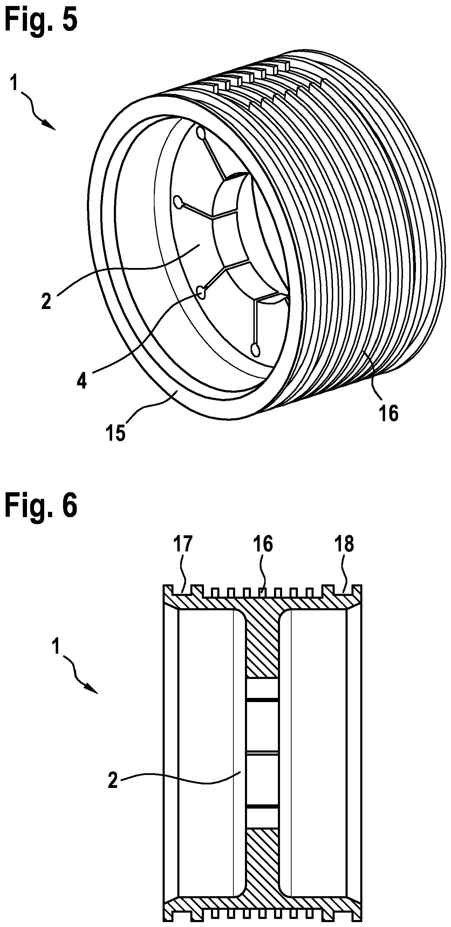

In Fig. 5 ist eine zweite Ausführungsform der Kühlhülse 1 dargestellt. Im Unterschied zur Kühlhülse der ersten Ausführungsform, wie sie in den Figuren 1 bis 4 gezeigt ist, weist die Kühlhülse nach Figur 5 keinen im Wesentlichen C-förmigen Längsschnitt auf, sondern einen H-förmigen Längsschnitt. Dabei ist der Flansch 2 mittig innerhalb einer rohrförmigen Wandung 15 angeordnet, wobei er insbesondere einstückig mit der Wandung 15 ausgebildet ist. Der Flansch 2 ist dabei wie bei der ersten Ausführungsform der Kühlhülse 1 mit Schlitzen 4 versehen. In einer Außenseite der rohrförmigen Wandung 15 sind Rippen 16 eingeprägt, wodurch Kanäle gebildet werden, durch die Kühlflüssigkeit geführt werden kann, um Wärme aktiv von der Kühlhülse weg zu transportieren. Im Bereich eines Einlasses und eines Auslasses können die Rippen unterbrochen oder versetzt sein, um die Verteilung der Kühlflüssigkeit zu verbessern.

Wie beispielsweise in Fig. 6, die eine Seitenansicht der Kühlhülse 1 der zweiten Ausführungsform zeigt, erkennbar ist, ist an axialen Enden der Wandung jeweils eine Ringnut 17, 18 ausgebildet, die zur Aufnahme von Dichtungen dienen. Eine derartige Dichtung ist beispielsweise ein O-Ring. Mit Hilfe derartiger Dichtungen kann der Bereich zwischen den Ringnuten 17, 18 mit den Rippen 16 mit einer Kühlflüssigkeit beaufschlagt werden, wobei ein axialer Austritt der Kühlflüssigkeit, die zwischen der Kühlhülse und einer Gehäusewandung eingeschlossen ist, durch die in den Ringnuten 17, 18 angeordneten Dichtungen verhindert wird. Im Gehäuse beziehungsweise der Gehäusewandung können dann entsprechende Zuführ- beziehungsweise Abführkanäle für die Kühlflüssigkeit ausgebildet sein.

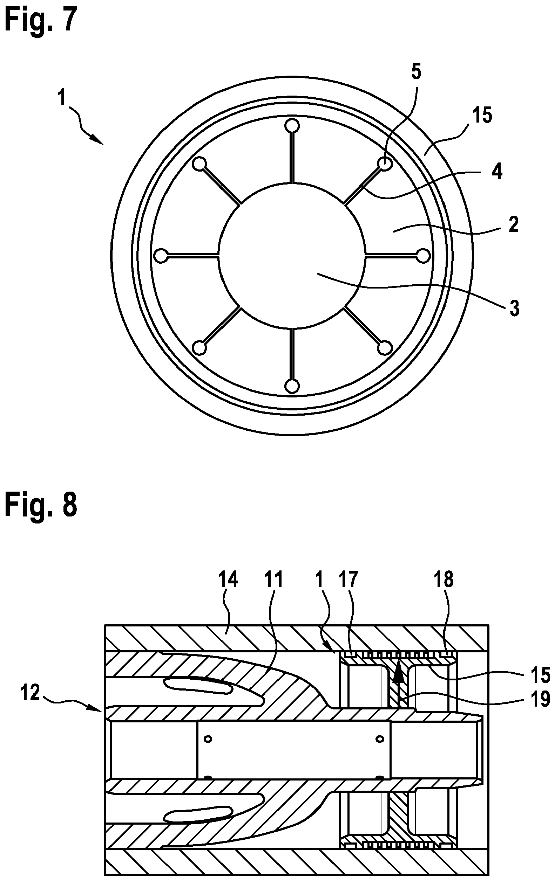

Fig. 7 zeigt eine Stirnansicht der Kühlhülse 1 gemäß Figur 5.

In Fig. 8 ist diese Kühlhülse 1 in einer Anbausituation dargestellt, bei der sie auf eine Lagerhülse 11 aufgepresst ist. Zwischen den Ringnuten 17, 18 ist schematisch dargestellt, dass eine Kühlflüssigkeit vorhanden ist. Ein Pfeil 19 symbolisiert dabei den Wärmetransport von der Lagerhülse 11 durch die Kühlhülse 1 zur Kühlflüssigkeit und zur Gehäusewandung 15.

Die erfindungsgemäße Kühlhülse ermöglicht eine effektive Wärmewegführung von der Lagerhülse, ohne großen Bauraum zu benötigen. Dabei erfolgt beispielsweise mittels Presspassung eine sichere Anlage der Kühlhülse an der Lagerhülse, wobei aufgrund der durch Schlitze erreichten Elastizität des Flansches der Kühlhülse die auf die Lagerhülse wirkenden Kräfte gering gehalten werden, sodass eine mechanische Beeinträchtigung ebenfalls gering bleibt. Zur Wärmeübertragung von der Kühlhülse auf die Gehäusewandung erfolgt dann entweder eine Anlage der Kühlhülse mittels Laschen an der Gehäusewandung und somit eine direkte Wärmeübertragung oder aber eine Wärmeabfuhr mittels einer Kühlflüssigkeit, wobei zwischen der Gehäusewandung und der Kühlhülse kein mechanischer Kontakt hergestellt wird. Über die Kühlhülse werden daher keine Spannungen in das Lager beziehungsweise die Gehäusewandung eingebracht.

Die Erfindung ist nicht auf eine der beschriebenen Ausführungsbeispiele beschränkt. So ist es beispielsweise auch denkbar, die in den Figuren 5 bis 8 gezeigte Ausführungsform der Kühlhülse dahingehend abzuwandeln, dass sie einen C-förmigen Längsschnitt aufweist. Ebenso ist es denkbar, bei der Ausführungsform nach den Figuren 1 bis 4 die Anzahl der Laschen zu variieren. Auch ist die Erfindung sowohl mit Axiallagern als auch mit Radiallagern einsetzbar.

## Patentansprüche

1. Kühlhülse für ein Lager (12), die einen radialen Flansch (2) mit einer zentralen Durchgangsöffnung (3) aufweist, **dadurch gekennzeichnet, dass** von der zentralen Durchgangsöffnung (3) tendenziell radial nach außen laufende Schlitze (4) ausgehen.

2. Kühlhülse nach Anspruch 1, **dadurch gekennzeichnet, dass** an einem radial äußeren Ende der Schlitze (4) jeweils eine Erweiterung (5) ausgebildet ist, wobei die Erweiterung (5) insbesondere kreisförmig ausgeformt ist.

3. Kühlhülse nach einem der vorhergehenden Ansprüche, **dadurch gekennzeichnet, dass** an einem äußeren Rand des Flansches (2) elastische und/oder biegbare Laschen (7) angeordnet sind, die eine axiale Erstreckung aufweisen.

4. Kühlhülse nach einem der vorhergehenden Ansprüche, **dadurch gekennzeichnet, dass** die Laschen (7) ausgehend vom Flansch (2) zumindest abschnittweise nach außen geneigt sind.

5. Kühlhülse nach einem der vorhergehenden Ansprüche, **dadurch gekennzeichnet, dass** der Flansch (2) eine zumindest teilweise konusförmige Umfangswandung (9) aufweist, die sich in Richtung der Laschen (7) aufweitet.

6. Kühlhülse nach Anspruch 5, **dadurch gekennzeichnet, dass** zwischen der konusförmigen Umfangswandung (9) und den Laschen (7) eine Einschnürung (10) ausgebildet ist.

7. Kühlhülse nach einem der vorhergehenden Ansprüche, **dadurch gekennzeichnet, dass** sie eine rohrförmige Wandung (15) aufweist, die beidseitig axial über den Flansch (2) hinausgeht.

8. Kühlhülse nach Anspruch 7, **dadurch gekennzeichnet, dass** in einer Außenseite der Wandung (15) Rippen (16) eingeprägt sind.

9. Kühlhülse nach einem der Ansprüche 7 oder 8, **dadurch gekennzeichnet, dass** im Bereich axialer Enden der Wandung (15) Ringnuten (17, 18) zur Aufnahme einer Dichtung eingeformt sind.

10. Kühlhülse nach einem der Ansprüche 7 bis 9, **dadurch gekennzeichnet, dass** eine Materialdicke im Bereich der Wandung (15) geringer ist als im Bereich des Flansches (2).

11. Lager mit einer Kühlhülse nach einem der vorhergehenden Ansprüche, **dadurch gekennzeichnet, dass** eine Lagerhülse (11) in die Durchgangsöffnung (3) der Kühlhülse (1) eingesetzt ist.

12. Lager nach Anspruch 11, **dadurch gekennzeichnet, dass** die Lagerhülse (11) mittels Presspassung in der Durchgangsöffnung (3) aufnehmbar ist.

13. Lager nach Anspruch 11 oder 12, umfassend eine Gehäusewandung (14), **dadurch gekennzeichnet, dass** die Kühlhülse (1) an einem Bereich (13) der Lagerhülse (11) mit verändertem Durchmesser angeordnet ist, wobei die Lagerhülse (11) und die Kühlhülse (1) an die Gehäusewandung (14) anlegbar sind.

## Claims

1. Cooling sleeve for a bearing (12), which cooling sleeve has a radial flange (2) with a central through opening (3), **characterized in that** slots (4) which generally run radially to the outside emanate from the central through opening (3).

2. Cooling sleeve according to Claim 1, **characterized in that** in each case one widened portion (5) is configured at a radially outer end of the slots (4), the widened portion (5) being shaped, in particular, in a circular manner.

3. Cooling sleeve according to either of the preceding claims, **characterized in that** elastic and/or flexible tabs (7) which have an axial extent are arranged on an outer edge of the flange (2).

4. Cooling sleeve according to one of the preceding claims, **characterized in that**, starting from the flange (2), the tabs (7) are inclined towards the outside at least in sections.

5. Cooling sleeve according to one of the preceding claims, **characterized in that** the flange (2) has an at least partially conical circumferential wall (9) which widens in the direction of the tabs (7).

6. Cooling sleeve according to Claim 5, **characterized in that** a constriction (10) is configured between the conical circumferential wall (9) and the tabs (7).

7. Cooling sleeve according to one of the preceding claims, **characterized in that** it has a tubular wall (15) which protrudes axially beyond the flange (2) on both sides.

8. Cooling sleeve according to Claim 7, **characterized in that** ribs (16) are stamped in an outer side of the wall (15).

9. Cooling sleeve according to either of Claims 7 and 8, **characterized in that** annular grooves (17, 18) for receiving a seal are formed in the region of axial ends of the wall (15).

10. Cooling sleeve according to one of Claims 7 to 9, **characterized in that** a material thickness in the region of the wall (15) is smaller than in the region of the flange (2).

11. Bearing having a cooling sleeve according to one of the preceding claims, **characterized in that** a bearing sleeve (11) is inserted into the through opening (3) of the cooling sleeve (1).

12. Bearing according to Claim 11, **characterized in that** the bearing sleeve (11) can be received in the through opening (3) by means of a press fit.

13. Bearing according to Claim 11 or 12, comprising a housing wall (14), **characterized in that** the cooling sleeve (1) is arranged on a region (13) of the bearing sleeve (11) with a modified diameter, it being possible for the bearing sleeve (11) and the cooling sleeve (1) to bear against the housing wall (14).

## Revendications

1. Douille de refroidissement pour un palier (12) qui présente une bride radiale (2) avec une ouverture de passage centrale (3), **caractérisée en ce que** des fentes (4) s'étendant globalement radialement vers l'extérieur partent de l'ouverture de passage centrale (3).

2. Douille de refroidissement selon la revendication 1, **caractérisée en ce qu'**un élargissement (5) est à chaque fois réalisé au niveau d'une extrémité radialement extérieure des fentes (4), l'élargissement (5) étant notamment réalisé sous forme circulaire.

3. Douille de refroidissement selon l'une quelconque des revendications précédentes, **caractérisée en ce que** des pattes élastiques et/ou flexibles (7) sont disposées au niveau d'un bord extérieur de la bride (2), lesquelles présentent une étendue axiale.

4. Douille de refroidissement selon l'une quelconque des revendications précédentes, **caractérisée en ce que** les pattes (7) sont inclinées au moins en partie vers l'extérieur à partir de la bride (2).

5. Douille de refroidissement selon l'une quelconque des revendications précédentes, **caractérisée en ce que** la bride (2) présente une paroi périphérique au moins en partie conique (9) qui s'élargit dans la direction des pattes (7).

6. Douille de refroidissement selon la revendication 5, **caractérisée en ce qu'**un rétrécissement (10) est réalisé entre la paroi périphérique conique (9) et les pattes (7).

7. Douille de refroidissement selon l'une quelconque des revendications précédentes, **caractérisée en ce qu'**elle présente une paroi tubulaire (15) qui fait saillie des deux côtés axialement au-delà de la bride (2).

8. Douille de refroidissement selon la revendication 7, **caractérisée en ce que** des nervures (16) sont marquées dans un côté extérieur de la paroi (15).

9. Douille de refroidissement selon l'une quelconque des revendications 7 ou 8, **caractérisée en ce que** des rainures annulaires (17, 18) pour recevoir un joint d'étanchéité sont formées dans la région d'extrémités axiales de la paroi (15).

10. Douille de refroidissement selon l'une quelconque des revendications 7 à 9, **caractérisée en ce qu'**une épaisseur de matériau dans la région de la paroi (15) est inférieure à une épaisseur de matériau dans la région de la bride (2).

11. Palier comprenant une douille de refroidissement selon l'une quelconque des revendications précédentes, **caractérisé en ce qu'**une douille palier (11) est insérée dans l'ouverture de passage (3) de la douille de refroidissement (1).

12. Palier selon la revendication 11, **caractérisé en ce que** la douille palier (11) peut être reçue par ajustement serré dans l'ouverture de passage (3).

13. Palier selon la revendication 11 ou 12, comprenant une paroi de boîtier (14), **caractérisé en ce que** la douille de refroidissement (1) est disposée au niveau d'une région (13) de la douille palier (11) de différent diamètre, la douille palier (11) et la douille de refroidissement (1) pouvant être appliquées contre la paroi de boîtier (14).
